# EUROPÄISCHE PATENTSCHRIFT

(11) **EP 3 097 368 B1**
(45) Veröffentlichungstag und Bekanntmachung des Hinweises auf die Patenterteilung: **13.03.2019**
(21) Anmeldenummer: 15703011.5
(22) Anmeldetag: 23.01.2015
(51) Int. Cl.: F24S 40/00, F24S 20/20, F24S 60/00

(54) **SOLARKRAFTWERK MIT ROHRLEITUNGSSYSTEM**
SOLAR POWER PLANT WITH PIPELINE SYSTEM
CENTRALE SOLAIRE AVEC SYSTÈME DE CONDUITES

(30) Priorität: 24.01.2014 EP 14152453
(43) Veröffentlichungstag der Anmeldung: 30.11.2016
(73) Patentinhaber: BASF SE, 67056 Ludwigshafen am Rhein (DE)
(72) Erfinder: WORTMANN, Jürgen, 67117 Limburgerhof (DE); LUTZ, Michael, 67346 Speyer (DE); FEDERSEL, Katharina, 69123 Heidelberg (DE); SCHIERLE-ARNDT, Kerstin, 64673 Zwingenberg (DE); MAURER, Stephan, 67435 Neustadt (DE); LADENBERGER, Michael, 76848 Darstein (DE)
(86) Internationale Anmeldenummer: PCT/EP2015/051387
(87) Internationale Veröffentlichungsnummer: WO 2015/110594

(56) Entgegenhaltungen:
- WO-A1-2013/034587
- DE-A1- 4 424 176
- US-A- 4 044 949
- US-A- 4 366 853

## Beschreibung

Die Erfindung geht aus von einem Solarkraftwerk mit einem Rohrleitungssystem mit mindestens einer Receiverleitung, in der eine Salzschmelze als Wärmeträger durch einstrahlende Sonnenenergie erwärmt wird, sowie mindestens einem Entleerungsbehälter und/oder einem Speicher für den Wärmeträger, wobei der Wärmeträger einen Dampfdruck von weniger als 0,5 bar bei maximaler Betriebstemperatur aufweist.

Solarkraftwerke sind zum Beispiel linear konzentrierende Solarkraftwerke wie Fresnel-Solarkraftwerke oder Parabolrinnen-Solarkraftwerke, oder Turmkraftwerke. In diesen wird als Wärmeträger, der einen Dampfdruck von weniger als 0,5 bar bei maximaler Betriebstemperatur aufweist, zum Beispiel eine Salzschmelze eingesetzt.

In einem linear konzentrierenden Solarkraftwerk ist das gesamte Rohrleitungssystem im Allgemeinen in Form von Netzwerken gestaltet, die der Erfassung solarer Energie dienen. Hierzu wird die Strahlungsenergie der Sonne mittels Parabolspiegeln oder Fresnel-Spiegeln auf Receiver konzentriert. Die Kombination von Spiegel und Receiver wird üblicherweise Kollektor genannt. Eine Reihe von Kollektoren wird zu so genannten Solarschleifen in Reihe geschaltet. Hierzu sind die Receiver jeweils mit dem Rohrleitungssystem verbunden, beziehungsweise stellen einen Teil des Rohrleitungssystems dar. Das Rohrleitungssystem wird von der Wärmeträgerflüssigkeit durchströmt, auf die die von den Receivern erfasste Strahlungsenergie übertragen wird.

Wärmeträger, die einen Dampfdruck von weniger als 0,5 bar bei maximaler Betriebstemperatur aufweisen, sind zum Beispiel Salzschmelzen, beispielsweise sogenanntes Solarsalz, ein Gemisch aus Natriumnitrat und Kaliumnitrat im Verhältnis von 60:40. Dieses wird insbesondere eingesetzt, um höhere Betriebstemperaturen und damit einen höheren Wirkungsgrad im Solarkraftwerk zu erzielen.

Der Einsatz von Spiegeln zur Konzentration von Solarenergie ist zum Beispiel in WO 2009/101586 A2 oder WO 2012/006257 A2 beschrieben. In beiden Verfahren wird die Solarenergie jedoch eingesetzt, um in einer Rohrleitung Wasser zu verdampfen. Der Nachteil dieses Systems ist, dass sich Dampf direkt nicht in großen Mengen speichern lässt, wie es bei linear konzentrierenden Solarkraftwerken benötigt wird. Werden Wärmeträgerflüssigkeiten eingesetzt, die einen niedrigen Dampfdruck, zum Beispiel unter 0,5 bar, besitzen, ist die Wärmespeicherung vergleichsweise einfach. Die erhitzte Wärmeträgerflüssigkeit wird einem großen Behälter oder Tank gefüllt. Die Wärme kann aus diesem Behälter bei Bedarf durch Austankung gewonnen und genutzt werden.

Die Verwendung eines Spiegels zum Einfangen von Solarenergie, um beispielsweise Sand, Metall oder Salz zu schmelzen, ist aus WO 2010/149177 A2 bekannt.
Um die gewünschten hohen Temperaturen in einem Solarkraftwerk zu erhalten, werden als Wärmeträger Flüssigkeiten eingesetzt, die bei maximaler Betriebstemperatur einen Dampfdruck von weniger als 0,5 bar aufweisen, beispielsweise Salzschmelzen. Als Wärmespeicher werden üblicherweise sehr große, mit der Schmelze gefüllte Tanks eingesetzt. Hierbei ist es zum Beispiel möglich, eine Kombination aus einem Tank mit einer Temperatur nahe der minimalen Betriebstemperatur und einem Tank mit einer Temperatur mit der maximalen Betriebstemperatur bereitzustellen. Bei Einstrahlung von Solarenergie wird der Wärmeträger aufgewärmt und von dem Tank mit niedrigerer Temperatur in den Tank mit hoher Temperatur umgefüllt. Um die Wärme zu nutzen, wird die Wärme des Wärmeträgers aus dem Tank mit hoher Temperatur an einen zweiten Kreislauf zur Verdampfung von Wasser abgegeben und der abgekühlte Wärmeträger in den Tank mit niedrigerer Temperatur zurückgeleitet. Alternativ zum Einsatz von einem Tank mit hoher Temperatur und einem Tank mit niedriger Temperatur ist es auch möglich, einen Schichtenspeicher, der auch als thermokliner Tank bezeichnet werden kann, einzusetzen.
Bekannt ist, dass Speichersysteme in Solarkraftwerken angeordnet sind, die mehrere Speichertanks umfassen können und in denen die Gasphasen dieser Speichertanks mit Gaspendelleitungen untereinander verbunden sind. In Zweitanksystemen wird Gas zwischen einem heißen Tank und einem kalten Tank gependelt. Bekannt ist auch, dass in ein solches Pendelsystem Stickstoff aus Flüssigstickstofftanks oder Luft eingespeist werden kann, während die Abluft in die Umgebung geführt wird.

Ein Wärmespeichersystem für Warmwasser in Gebäuden mit Rohrleitungen, die die Gasphasen verbinden, ist zum Beispiel aus US 4,044,949 bekannt.

Ein Solarkraftwerk mit einem Rohrleitungssystem enthaltend eine Salzschmelze als Wärmeträger ist aus der WO 2013/034587 A1 bekannt.

Der Nachteil des Einsatzes von Salzschmelzen ist, dass diese oberhalb der Raumtemperatur erstarren können. Die meisten Salzschmelzen sind sogar hochschmelzend. Eine Natrium-/Kaliumnitratmischung schmilzt zum Beispiel im Eutektikum bei einem Gewichtsmischungsverhältnis von 44:56 bei einer Temperatur von 218°C. In langen Rohrleitungssystemen, wie diese in Solarkraftwerken auftreten, sind Salzschmelzen mit hohen Schmelzpunkten als Wärmeträger schwierig sicher zu betreiben. Ein Einfrieren der Salzschmelze kann in Rohrleitungssystemen große wirtschaftliche Schäden verursachen. Ursache der Schäden kann ihr großes Schmelzvolumen sein, das heißt eine starke Volumenausdehnung beim Aufschmelzen. Hierdurch besteht die Gefahr, dass Armaturen und Rohrleitungen aufgedrückt und stark beschädigt werden.
Ein Einfrieren von Salzschmelzen kann grundsätzlich außerhalb der Betriebszeiten des Solarkraftwerks, das heißt außerhalb der Strahlungszeiten der Sonne oder bei witterungsbedingtem Ausfall der Sonnenstrahlung, erfolgen. Hierbei kommt es zu einer Volumenkontraktion, die in Abhängigkeit vom Rohrleitungssystem und Betriebszustand zu einem unterschiedlichen Erstarrungszustand führen kann. Es wird erwartet, dass die erstarrende Schmelze zu mehr oder minder größeren Einheiten in tiefen Bereichen des Rohrleitungssystems zusammenläuft, während nicht mit Salz gefüllte Räume sich in oberen Bereichen des Systems ausbilden. Beim Wiederaufschmelzen kann durch gegebenenfalls große räumliche Entfernung zwischen den Aufschmelzstellen mit Volumenexpansion und den nicht mit Salz gefüllten Räumen kein ausreichender Volumenausgleich erfolgen, um auftretende Drücke abzubauen, was zu Schädigungen am Rohrleitungssystem durch die Volumenexpansion beim Schmelzen führen kann.

Derzeit wird zur Verhinderung des Einfrierens der Salzschmelze im Rohrleitungssystem bei längeren Stillstandszeiten das Rohrleitungssystem entleert.

Ein Einfrieren der Salzschmelze im Rohrleitungssystem muss zudem auch bei Anlagenstörungen, zum Beispiel bei Energieausfall, verhindert werden. Auch in diesem Fall müssen Entleerungseinrichtungen sicher, das heißt in hoher Verfügbarkeit, bestimmungsgemäß funktionieren.

Derzeit werden zum Entleeren des Rohrleitungsnetzwerks fallend angeordnete Entleerungsleitungen und ein tieflegender Entleerungsbehälter eingesetzt. Die Energie für die Entleerung des Rohrleitungsnetzwerkes wird üblicherweise aus der potentiellen Energie der flüssigen Salzschmelze entnommen. Die Entleerung kann aber auch zusätzlich durch einen treibenden Gasdruck gefördert werden. Der treibende Gasdruck kann beispielweise an der höchsten Stelle im Rohrleitungsnetzwerk aufgebracht werden.

Alternativ zu einer guten Entleerungstechnologie ist es auch möglich, Salzmischungen einzusetzen, die einen niedrigeren Schmelzpunkt als das sogenannte Solarsalz aufweisen. Hierdurch wird das Risiko verringert, dass das Rohrleitungssystem einfriert und möglicherweise beschädigt wird. Verfügbare Salze und Salzmischungen mit einem niedrigeren Schmelzpunkt haben jedoch den Nachteil, dass ihre thermische Stabilität geringer ist und dass sie zudem nicht gut verfügbare oder toxikologisch beachtenswerte Komponenten enthalten können. Eine Reduktion des Schmelzpunktes wird zum Beispiel durch Zugabe von Nitritsalzen erreicht. Diese haben allerdings die Eigenschaft, dass bei hohen Betriebstemperaturen von Wärmeträgeranlagen und anwesendem Sauerstoff Nitritionen zu Nitrationen oxidiert werden können, wodurch der Schmelzpunkt des Wärmeträgers stark ansteigt. Um dies zu vermeiden, wird üblicherweise der Sauerstoffzutritt dadurch ausgeschlossen, dass der Wärmeträgerkreis strikt dichtend vom Umgebungsgas abgeschlossen wird. Abgeschlossene Systeme benötigen allerdings ebenfalls Eingänge und Ausgänge, durch die Stoffe in das System eingeführt bzw. aus dem System ausgeführt werden können. Diese Ein- und Ausgänge müssen kontrolliert sein, wobei die Kontrolle zum Beispiel den Ausschluss von Sauerstoff oder die Abscheidung luftfremder Stoffe, beispielsweise Stickstoffdioxid, umfasst.

Des Weiteren besteht bei Nitrit- und Nitratmischungen im Grenzbereich ihrer thermischen Stabilität oder bei Kontakt mit Verunreinigungen, beispielsweise mit Stoffen, die hochgeladene Metallionen enthalten, oder organischen Stoffen, die Gefahr, dass sich Stickoxide bilden und in offenen Systemen an die Umgebung abgeben werden. Beide Probleme können dadurch beherrscht werden, dass der Wärmeträgerkreis geschlossen von den Gasen der Umgebung betrieben wird. Ein solcher geschlossener Wärmeträgerkreis ist zum Beispiel in einer chemischen Anlage leicht realisierbar, da alle Komponenten der Anlage dicht benachbart errichtet werden. Allerdings ist dies in Rohrleitungsnetzwerken von solaren Großkraftwerken, die weit ausgedehnt sind und im Allgemeinen Gesamtrohrlängen von mehr als 100 km erreichen können, nicht der Fall. Im Fall einer Entleerung müssen an den höchsten Stellen des Rohrleitungssystems gegebenenfalls weit entfernt voneinander Belüftungen geöffnet werden. Aufgrund der gegenseitig weit entfernten Belüftungsstellen wird üblicherweise eine Belüftung mit Umgebungsluft durchgeführt. Dies hat jedoch wieder den Nachteil, dass durch die Umgebungsluft in unkontrollierbarer Menge Sauerstoff, Wasser oder Kohlenstoffdioxid in das System eingebracht werden, die mit Komponenten der Wärmeträgerflüssigkeit reagieren können. Beispielsweise können Nitritionen mit Sauerstoff zu Nitrationen reagieren. Kohlenstoffdioxid kann Carbonate bilden, die auch als Feststoffe ausfallen können und Wasser kann mit Nitraten und Nitriten bei hohen Temperaturen Hydroxide bilden.

Aufgabe der vorliegenden Erfindung ist es, ein Solarkraftwerk mit einem Rohrleitungssystem bereitzustellen, das zum einen einen sicheren Betrieb des Kraftwerks erlaubt und bei dem zum anderen eine unzulässige chemische Veränderung des eingesetzten Wärmeträgers vermieden wird.
Diese Aufgabe wird gelöst durch ein Solarkraftwerk mit einem Rohrleitungssystem , enthaltend eine Salzschmelze als Wärmeträger, der einen Dampfdruck von weniger als 0,5 bar bei maximaler Betriebstemperatur aufweist, wobei das Rohrleitungssystem weiterhin mindestens eine Receiverleitung, in der die Salzschmelze durch einstrahlende Sonnenenergie erwärmt wird, oder einen Zentralreceiver, sowie mindestens einen Entleerungsbehälter und/oder einen Speicher für den Wärmeträger umfasst, wobei das Rohrleitungssystem weiterhin ein Gaspendelsystem umfasst, das Gasräume der in dem Solarkraftwerk zugesetzten Behälter untereinander verbindet und einen zentralen Gasspeicher oder einen zentralen Gasanschluss und einen zentralen Abgasauslass, durch den Gas an die Umgebung abgegeben werden kann, aufweist.
Durch den zentralen Gasspeicher oder den zentralen Gasanschluss ist es möglich, das Gaspendelsystem mit einem Gas zu betreiben, das den eingesetzten Wärmeträger schützen oder nicht oder nur kontrolliert verändern kann. Hierdurch wird vermieden, dass das im System enthaltene Gas den Wärmeträger unzulässig schädigt. Zum Beispiel muss in bestimmten Fällen die Reaktion von Nitrit zu Nitrat mittels des im Gasraum enthaltenen Sauerstoffs zu Nitrat verhindert werden, das heißt, dass die Nitratkonzentration auf einem maximalen Wert gehalten wird, um einen Anstieg des Schmelzpunktes zu verhindern. Auf der anderen Seite ist es durch Verwendung eines Sauerstoff enthaltenden Gases möglich, die Nitritkonzentration in einer vorwiegend nitrathaltigen Salzmischung auf einem bestimmten Wert zu halten, da gegebenenfalls entstehendes Nitrit mit dem im Gas enthaltenen Sauerstoff wieder zum Nitrat umgesetzt werden kann. Eine zu hohe Nitritkonzentration führt zur thermischen Salzinstabilität, da sich Nitritionen leichter und bei niedrigeren Temperaturen als Nitrationen zu Oxidionen zersetzen. Durch Zusatz von Wasser können einerseits durch thermische Zersetzung gebildete Oxidionen in Hydroxidionen umgewandelt werden, die geringer korrosiv sind. Andererseits ziersetzt ein Übermaß an Wasser Nitrite und Nitrate unter Hydroxidbildung und erhöht dadurch die Korrosivität der Salzschmelze. Kohlenstoffdioxid kann durch Bildung von Carbonaten Nitrate und Nitrite zersetzen.

Die Receiverleitungen sind erfindungsgemäß die Rohrleitungen, an denen Receiver angeordnet sind. Die Receiver sind üblicherweise einzelne Segmente der Rohrleitungen, die von einem Glasrohr umschlossen sind. Unterhalb der Glasrohre befindet sich ein Spiegelsystem, in dem einstrahlendes Sonnenlicht reflektiert und auf das Glasrohr gelenkt wird. Durch die einfallende Strahlung auf das Glasrohr wird Wärme an den Wärmeträger, der die Rohrleitung durchströmt, geleitet, wodurch der Wärmeträger aufgeheizt wird.

Solarkraftwerke im Rahmen der vorliegenden Erfindung sind linear konzentrierende Solarkraftwerke, beispielsweise Fresnel-Solarkraftwerke oder Parabolrinnen-Solarkraftwerke, oder Turmkraftwerke, bei denen einfallendes Sonnenlicht mit Hilfe von Spiegeln auf einen Zentralreceiver, der üblicherweise auf einem Turm angeordnet ist, gelenkt wird.

Erfindungsgemäß umfasst das Gaspendelsystem ein Rohrleitungsnetzwerk, das jeweils mit den Gasräumen der im Solarkraftwerk eingesetzten Behälter verbunden ist. Hierdurch ist es möglich, beim Befüllen oder Entleeren der Behälter über das Gaspendelsystem einen Druckausgleich durch Gaszufuhr in einen zu entleerenden Tank oder Gasentnahme aus einem zu befüllenden Tank zu realisieren. Da bei gleichbleibender Gasmasse und gleichem Druck das Volumen mit zunehmender Temperatur zunimmt, ist es notwendig, Gas aus dem Gaspendelsystem zu entnehmen, wenn ein Gasübergang durch das Gaspendelsystem von einem kalten Behälter in einen heißen Behälter erfolgt, um entsprechende Volumenänderungen durch Umfüllen von Wärmeträger auszugleichen. Entsprechend ist es notwendig, bei einem Gasübergang von einem heißen in einen kalten Behälter Gas zuzuführen, um das Volumen konstant zu halten. Die Gasabfuhr erfolgt dabei über den zentralen Abgasauslass, die Gaszufuhr über den zentralen Gasanschluss oder aus dem zentralen Gasspeicher. Wenn ein zentraler Gasspeicher eingesetzt wird, ist es besonders vorteilhaft, wenn der zentrale Abgasauslass mit dem zentralen Gasspeicher verbunden ist, so dass das Abgas in dem zentralen Gasspeicher aufgefangen wird. Dies ist insbesondere sinnvoll, wenn ein von Umgebungsluft verschiedenes Gas eingesetzt wird, da hierdurch die Gasverluste minimiert werden können. Der zentrale Gasspeicher dient in diesem Falle gleichzeitig auch als Volumenausgleichsbehälter für das Gaspendelsystem. Der Gasspeicher kann dabei entweder als Volumenspeicher mit sehr kleinem Überdruck oder als Druckgasspeicher realisiert werden.

Wenn ein zentraler Abgasauslass vorgesehen ist, so ist es möglich, nur einen Abgasauslass vorzusehen oder auch mehrere Abgasauslässe entweder nahe beieinander oder über das Gaspendelsystem verteilt anzuordnen. Ebenso ist es möglich, anstelle nur eines zentralen Gasanschlusses mehrere Gasanschlüsse vorzusehen, die ebenfalls nahe beieinander liegen können oder über das Gaspendelsystem verteilt.

Bevorzugt ist es, wenn für das Gaspendelsystem Rohrleitungen mit einem großen Querschnitt eingesetzt werden, um einen sehr niedrigen Strömungswiderstand zu realisieren. Hierzu wird das Gaspendelsystem üblicherweise nur auf einen sehr geringen Überdruck von wenigen Millibar ausgelegt. Durch Wahl eines geringen Überdrucks lassen sich große Querschnitte der Rohrleitungen realisieren. Dabei können die Rohrleitungen auch mit vergleichsweise geringen Wandstärken gefertigt werden.

In einer Ausführungsform der Erfindung wird über den zentralen Gasanschluss Frischgas zugeführt. Durch die Zufuhr von Frischgas können Gasverluste, die zum Beispiel durch Ablassen von Gas an die Umgebung entstehen können, ausgeglichen werden. Im Rahmen der vorliegenden Erfindung bedeutet Frischgas dabei, dass Gas aus einem externen Vorrat in die Anlage zugeführt werden kann, wobei hierzu zum Beispiel externe Gasspeicher vorgesehen sein können. Wenn das Gas in der Anlage Umgebungsluft ist, kann das Frischgas auch als Frischluft aus der Umgebung angesaugt werden. Bei Bedarf kann das Frischgas auch Reinigungsoperationen unterzogen werden, die beispielsweise Staub, Aerosole, Wasserdampf oder Kohlenstoffdioxid entfernen.

In einer alternativen Ausführungsform wird über den zentralen Gasanschluss Anlagengas in das Gaspendelsystem eingeleitet. Unter Anlagengas wird dabei das in der Anlage enthaltene Gas verstanden, dass zum Beispiel über den zentralen Abgasauslass aus der Anlage entnommen werden kann. Wenn überschüssiges Gasvolumen in der Anlage, zum Beispiel in Folge thermischer Ausdehnung bei Temperaturerhöhung, anfällt, ist es notwendig, das abgelassene Gas aufzufangen und in einem geeigneten Gasbehälter zu speichern. Alternativ ist es auch möglich, das Anlagengas zu komprimieren und in einen Druckgasspeicher zu füllen.

Um im Falle eines Strömungsstillstands das Rohrleitungssystem zu entleeren, ist es notwendig, Gas in die Receiverleitungen einzuführen. Das Gas kann dem Gaspendelsystem entnommen werden. Wird eine beschleunigte Entleerung benötigt, kann stattdessen Treibgas mit erhöhtem Druck in die Receiverleitungen eingeführt werden. Hierzu kann Treibgas direkt aus einem Druckgassystem eingesetzt werden.

Bevorzugt ist es, für die Entleerung des Rohrleitungssystems ein Gasdrucksystem vorzusehen. Dieses umfasst zum Beispiel ein Rohrleitungsnetzwerk, das über Entleerungsventile mit dem Rohrleitungssystem verbunden ist. Zusätzlich können Anschlüsse an Entleerungsbehältern vorgesehen sein, in die der Wärmeträger zur Entleerung abgelassen wird. Die Entleerungsbehälter können jedoch alternativ auch mit dem Gaspendelsystem gekoppelt sein, so dass beim Entleeren des Rohrleitungssystems und dem damit verbundenen Befüllen der Entleerungsbehälter das Gas aus den Entleerungsbehältern in das Gaspendelsystem eingeleitet wird. Durch das Gasdrucksystem ist es möglich, Treibgas mit ausreichend hohem Druck für die Entleerung des Rohrleitungssystems bereitzustellen.

Beim Entleeren wird der in den Rohrleitungen enthaltene Wärmeträger durch das Gas in Richtung der Entleerungsbehälter getrieben und kann in die Entleerungsbehälter ablaufen. Dies hat insbesondere den Vorteil, dass ein Einfrieren der Rohrleitungen vermieden werden kann.

Insbesondere dann, wenn ein Wärmeträger eingesetzt wird, der nicht mit Sauerstoff in Kontakt kommen soll, beispielsweise, zum Beispiel wenn der Wärmeträgere Nitritsalze enthält, ist es notwendig, das über den zentralen Gasanschluss zuzuführende Gas in einem Gasspeicher bereitzustellen. Wird ein Schichtenspeicher zur Speicherung des Wärmeträgers eingesetzt, kann der Gasspeicher erheblich kleiner dimensioniert werden, als in einem System mit einem heißen und einem kalten Speicher für den Wärmeträger. In diesem Fall kann kalter Wärmeträger, wie beispielsweise in der WO2011/138270 beschrieben, flüssig ausgetankt werden und so thermisch bedingte Volumenschwankungen ausgleichen.

Um für das Gaspendelsystem und gegebenenfalls das Gasdrucksystem zur Zufuhr von Druckgas zur Entleerung der Rohrleitungen möglichst kurze Strecken realisieren zu können, ist es vorteilhaft, wenn sowohl die Rohrleitungen für das Gaspendelsystem als auch - sofern vorhanden - die Rohrleitungen für das Druckgas - parallel zum Hauptverteiler und Hauptsammler des Rohrleitungssystems angeordnet sind. Des Weiteren ist es aus Verfügbarkeitsgründen bevorzugt, wenn das Gasdrucksystem zur Zufuhr von Druckgas Druckspeicher in dezentraler Anordnung enthält, besonders bevorzugt in der Nähe der Entleerungsbehälter des Rohrleitungssystems und in der Nähe der Entleerungsventile. Ein großer Querschnitt für die Leitungen des Drucknetzes ist nicht erforderlich, da das unter Druck stehende Gas zur Entleerung nur selten benötigt wird und daher die Füllung der dezentralen Druckspeicher lange Zeit dauern darf.

Wenn ein Wärmeträger eingesetzt wird, der gegen Sauerstoff tolerant ist, ist es möglich, das Gas aus der Umgebungsluft zu gewinnen. Insbesondere, wenn eine reine Nitratsalzschmelze als Wärmeträger verwendet wird, ist es bevorzugt, ein sauerstoffhaltiges Gas einzusetzen, da im Falle einer Umwandlung von Nitrat zu Nitrit das Nitrit mit dem anwesenden Sauerstoff wieder in Nitrat umgewandelt wird. Hierdurch kann eine unerwünschte Verringerung der thermischen Stabilität verhindert werden. Als sauerstoffhaltiges Gas kann zum Beispiel Luft, mit Sauerstoff angereicherte Luft, Sauerstoff oder auch ein beliebiges mit Sauerstoff angereichertes Inertgas eingesetzt werden. Alternativ zum Sauerstoff ist es auch möglich, dem Gaspendelsystem Stickstoffoxide zuzuführen. Mit Hilfe des Konzentrationsverhältnisses von Stickstoffmonoxid zu Stickstoffdioxid kann Einfluss auf das Verhältnis von Nitrit- zu Nitratkonzentration des Wärmeträgers genommen werden. Eine hohe Konzentration von Stickstoffmonoxid fördert die Bildung von Nitrit, eine hohe Konzentration von Stickstoffdioxid fördert die Bildung von Nitrat.

Wenn jedoch ein Wärmeträger eingesetzt wird, der nicht sauerstofftolerant ist, beispielweise eine Salzschmelze, die auch Nitritsalz enthält, ist es bevorzugt, dem Gaspendelsystem ein Gas zuzuführen, das gegenüber dem eingesetzten Wärmeträger inert ist. In diesem Fall eigenen sich beispielweise Stickstoff oder Edelgase, bevorzugt Stickstoff.

Besonders bevorzugt ist es, das Druckgas aus dem Anlagengas zu gewinnen, das sich in den Gaspendelleitungen befindet. Das Anlagengas wird bevorzugt über ein gekühltes Abscheidesystem geführt, gegebenenfalls gefiltert und mit einem Kompressor auf die benötigte Druckstufe, bevorzugt 10 bis 20 bar abs, komprimiert.

Wenn das Solarkraftwerk keinen Schichtenspeicher für den Wärmeträger aufweist, sondern einen heißen Speicher und einen kalten Speicher, wird der Wärmeträger im Betrieb vom kalten Speicher in den heißen Speicher durch die Receiverleitungen überführt, wobei der Wärmeträger in den Receiverleitungen durch die einstrahlende Solarenergie erwärmt wird. Zur Energiegewinnung wird der Wärmeträger vom heißen Speicher in den kalten Speicher überführt und gibt Wärme ab, zum Beispiel zur Erzeugung von überhitztem Wasserdampf, der zum Antrieb von Turbinen und Generatoren zur Stromerzeugung eingesetzt wird. Durch das Überführen des Wärmeträgers vom heißen Speicher in den kalten Speicher oder von kalten Speicher in den heißen Speicher wird jeweils in einem der beiden Speicher Volumen von der Flüssigkeit freigegeben und im anderen Speicher von der Flüssigkeit belegt. Das von der Flüssigkeit freigegebene Volumen muss durch Gaszufuhr ausgeglichen werden. Hierzu wird das Gaspendelsystem genutzt. Gleichzeitig wird Gas aus dem Speicher verdrängt, in dem der Wärmeträger eingeleitet wird. Das Gas kann dann durch das Gaspendelsystem aus dem zu befüllenden Speicher in den zu entleerenden Speicher überführt werden. Hierbei ist allerdings zu berücksichtigen, dass die Temperatur des Gases wesentlich von der Temperatur seiner Umgebung bestimmt ist. So weist das Gas im kalten Speicher ungefähr die Temperatur des darin enthaltenen Wärmeträgers auf. Entsprechendes gilt auch für das Gas im heißen Tank. Beim Gasaustausch vom heißen Tank in den kalten Tank und umgekehrt nimmt das Gas die Temperatur seiner Umgebung durch Temperaturausgleich an. Das Gas weist also in Abhängigkeit von der Position im Gaspendelsystem unterschiedliche Temperaturen auf. Je nach Höhe seiner durchschnittlichen Temperatur beansprucht das Gas ein unterschiedlich großes Volumen, da das Volumen, das das Gas einnimmt, bei gleicher Masse temperaturabhängig ist. Mit steigender Temperatur nimmt auch das Volumen zu. Dies bedeutet, dass das Gas ein großes Volumen beansprucht, wenn der heiße Tank leer ist und der kalte Tank voll und ein kleines Volumen, wenn der kalte Tank leer und der heiße Tank voll ist. Dies führt weiterhin dazu, dass dann, wenn ein großes Volumen benötigt wird, mehr Gas im System ist, so dass für einen Volumenausgleich jeweils Gas in das System eingeleitet oder aus dem System entfernt werden muss. Das Einleiten oder Entfernen des Gases aus dem System erfolgt über den zentralen Gasanschluss, beziehungsweise den zentralen Abgasauslass. Insbesondere bei eingesetzten Intergasen ist es hier notwendig, das über den Abgasauslass aus dem System entfernte Gas in einem zentralen Gasspeicher zwischen zu speichern und aus diesem Zwischenspeicher wieder in das System über den zentralen Gasanschluss zuzuführen, wenn ein großes Gasvolumen benötigt wird.

Wenn als Gas Umgebungsluft genutzt wird, ist es möglich, bei Entleeren des heißen Tanks das überschüssige Gas an die Umgebung über das Abgasventil abzugeben und entsprechend bei Entleerung des kalten Tanks Umgebungsluft über den zentralen Gasanschluss zuzuführen.

Insbesondere wenn das Gas an die Umgebung abgegeben wird, ist es bevorzugt, wenn der zentrale Abgasauslass eine Vorrichtung zur Gasreinigung aufweist. In der Vorrichtung zur Gasreinigung können umweltschädliche Gase aus dem abgelassenen Anlagengas entfernt werden. Zudem ist es auch möglich, mit der Vorrichtung zur Gasreinigung zum Beispiel im Gas enthaltene Feststoffe oder Flüssigkeiten zu entfernen. Auf diese Weise ist es zum Beispiel möglich, mit dem Gas mitgerissene Flüssigkeitstropfen, beispielsweise Wärmeträger oder auch aufgrund von Abkühlung erstarrtem Wärmeträger aus dem Gas abzutrennen, bevor dieses an die Umgebung abgegeben wird. Auch ist es möglich, zum Beispiel Flüssigkeiten oder Feststoffe aus dem Gas zu entfernen, bevor dieses einem zentralen Gasspeicher zugeführt wird, um eine Verunreinigung des zentralen Gasspeichers zu vermeiden.
Insbesondere wenn als Wärmeträger Nitratsalze und/oder Nitritsalze eingesetzt werden, ist es weiterhin bevorzugt, wenn die Vorrichtung zur Gasreinigung Stickstoffoxide aus dem Gas entfernt. Die Stickstoffoxide können zum Beispiel durch Reaktion des Nitrits oder des Nitrats mit Sauerstoff entstehen. Da aus Umweltschutzgründen angestrebt ist, möglichst wenig oder keine Stickstoffoxide in die Umgebung abzugeben, ist es notwendig, diese aus dem Gas zu entfernen. Die Entfernung der Stickstoffoxide kann dabei mit einer herkömmlichen und dem Fachmann bekannten Denox-Anlage erfolgen.
Da in einem linear konzentrierenden Solarkraftwerk, beispielsweise einem Parabolrinnen-Solarkraftwerk oder einem Fresnel-Solarkraftwerk, die Rohrleitungssysteme, in denen die Receiver aufgenommen sind, in Form von mehreren Solarfeldern angeordnet sind, die jeweils über zentrale Sammler und Verteiler, durch die der Wärmeträger zu- und abgeführt wird, verbunden sind, ist es weiterhin vorteilhaft, die Rohrleitungen des Gaspendelsystems so zu verlegen, dass diese parallel zu Sammlern und Verteilern des Rohrleitungssystems für die Salzschmelze verlaufen. Auf diese Weise lassen sich die Rohrleitungen für das Gaspendelsystem möglichst kurz gestalten. Zudem ist es möglich, jeweils an den benötigten Stellen, die Rohrleitungen des Gaspendelsystems mit den Sammlern und Verteilern zu verbinden, ohne eine aufwändige Verrohrung vorsehen zu müssen.
Wenn das Solarkraftwerk mehrere Receiverleitungen umfasst, sind diese üblicherweise mit einem Sammler und einem Verteiler verbunden. Über den Verteiler wird das Wärmeträgermedium aus einem kalten Speicherbereich in die Receiverleitungen eingespeist, durchfließt die Receiverleitungen, in denen das Wärmeträgermedium erwärmt wird, und strömt in den Sammler, über den das Wärmeträgermedium in einen heißen Speicherbereich geführt wird. Hierbei können der heiße Speicherbereich und der kalte Speicherbereich jeweils durch baulich getrennte Behälter realisiert werden oder alternativ als Speicherbereiche in einem Schichtenspeicher, wobei sich der kalte Speicherbereich üblicherweise unten im Schichtenspeicher befindet und der heiße Speicherbereich oben.
Abhängig von der Geografie des Areals, in dem das Solarkraftwerk entsteht, können Sammler und Verteiler in baulicher Nähe zueinander angeordnet oder voneinander beabstandet sein. Wenn Sammler und Verteiler in baulicher Nähe zueinander angeordnet sind, sind die Receiverleitungen üblicherweise Rohrleitungsschleifen. Hierdurch kann eine ausreichend große Länge der Receiverleitungen realisiert werden, die notwendig ist, um das durch die Receiverleitungen strömende Wärmeträgermedium zu erwärmen. Bei voneinander beabstandetem Sammler und Verteiler können die Receiverleitungen auch linear den Sammler und Verteiler verbinden. In diesem Fall haben Sammler, Verteiler und Receiverleitungen die Gestalt einer Leiter, wobei die Receiverleitungen die Sprossen bilden.

Ausführungsbeispiele der Erfindung sind in den Figuren dargestellt und werden in der nachfolgenden Beschreibung näher erläutert.

Es zeigen:
- Figur 1: eine schematische Darstellung eines linear konzentrierenden Solarkraftwerks,
- Figur 2: eine schematische Darstellung eines linear konzentrierenden Solarkraftwerkes mit einem nach außen abgeschlossenen Gaspendelsystem,
- Figur 3: ein linear konzentrierendes Solarkraftwerk mit einem nach außen abgeschlossenen Gaspendelsystem und einem Gasdrucksystem zur Befüllung und Entleerung eines Solarfelds,
- Figur 4: ein linear konzentrierendes Solarkraftwerk in Doppelt-H-Struktur.

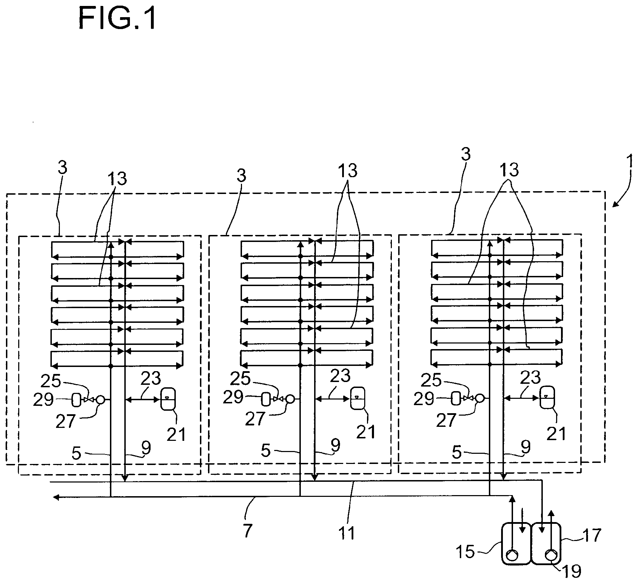

In Figur 1 ist ein linear konzentrierendes Solarkraftwerk schematisch dargestellt.

Ein linear konzentrierendes Solarkraftwerk 1 umfasst mehrere Segmente 3, die jeweils über einen Verteiler 5 mit einem zentralen Verteiler 7 und einem Sammler 9 mit einem zentralen Sammler 11 verbunden sind. Über die Verteiler 5 und Sammler 9 werden jeweils Receiverleitungen 13 mit einem Wärmeträger gespeist. Hierzu wird der Wärmeträger über den zentralen Verteiler 7 in die Verteiler 5 geleitet und strömt aus den Verteilern 5 in die Receiverleitungen 13. Die Receiverleitungen 13 weisen jeweils hier nicht dargestellte Receiver auf, in denen der Wärmeträger durch Solarstrahlung erwärmt wird. Der erwärmte Wärmeträger strömt aus den Receiverleitungen 13 in die Sammler 9 und von diesen in den zentralen Sammler 11. In der hier dargestellten Ausführungsform sind die Receiverleitungen 13 als Rohrleitungsschleifen gestaltet.

Der zentrale Verteiler 7 ist mit einem kalten Speicher 15 verbunden, aus dem der Wärmeträger entnommen wird, solange Sonnenlicht auf die Receiver fällt. Der erwärmte Wärmeträger wird dann durch den zentralen Sammler 11 in einen heißen Speicher 17 eingeleitet.

Die Receiver sind üblicherweise einzelne Segmente der Rohrleitungen, die von einem Glasrohr umschlossen sind. Unterhalb der Glasrohre befindet sich ein Spiegelsystem, in dem einstrahlendes Sonnenlicht reflektiert und auf das Glasrohr gelenkt wird. Durch die einfallende Strahlung auf das Glasrohr wird Wärme an den Wärmeträger, der die Rohrleitung durchströmt, geleitet, wodurch der Wärmeträger aufgeheizt wird. Bei einem Parabolrinnen-Solarkraftwerk sind die Spiegel dabei zum Beispiel in Form einer Rinne unterhalb des Glasrohres angeordnet. Bei einem Fresnel-Solarkraftwerk befinden sich einstellbare Spiegel, die in Abhängigkeit vom Winkel der einfallenden Sonnenenergie bewegt werden können, unterhalb der Rohrleitungen.

Um Energie zu gewinnen, wird der heiße Wärmeträger aus dem heißen Speicher 17 mit Hilfe einer Pumpe 19 entnommen und in einen hier nicht dargestellten Wärmeübertrager geleitet. Im Wärmeübertrager gibt der Wärmeträger Wärme an einen Dampfkreislauf ab, in dem Wasserdampf erzeugt und überhitzt wird. Mit dem überhitzten Dampf können dann zum Beispiel Turbinen zum Antrieb von Generatoren zur Stromerzeugung betrieben werden. Der den Wärmeübertrager verlassende abgekühlte Wärmeträger wird in den kalten Speicher 15 zurückgeführt. Üblicherweise ist die Menge an gespeichertem Wärmeträger so groß, dass die Menge an heißem Wärmeträger ausreicht, die Turbine auch dann noch zu betreiben, wenn keine Sonne scheint oder nicht ausreichend Sonnenstrahlung vorhanden ist, um große Mengen an Wärmeträger zu erwärmen.

Um in Stillstandszeiten die Rohrleitungen des linear konzentrierenden Solarkraftwerks 1 entleeren zu können, weist jedes Segment 3 einen Entleerungsbehälter 21 auf. Der Entleerungsbehälter 21 ist dabei über eine Entleerungsleitung 23 mit dem Sammler 9 eines Segments 3 verbunden. An den Verteiler 5 jedes Segmentes 3 ist ein Belüftungsventil 25 angeschlossen, das zum Entleeren der Rohrleitungen des Segments 3 geöffnet wird. Hierzu wird durch das Belüftungsventil 25 Druckgas in den Verteiler 5 eingeleitet, das Gas strömt durch den Verteiler 5 und die Receiverleitungen 13 in den Sammler 9 und drückt hierdurch den Wärmeträger aus Sammler 9, Receiverleitungen 13 und Verteiler 5 durch die Entleerungsleitung 23 in den Entleerungsbehälter 21.

Um für den erneuten Betrieb die einzelnen Segmente 3 wieder mit Wärmeträger zu befüllen, wird der Wärmeträger aus dem Entleerungsbehälter 21 durch die Entleerungsleitung 23 in den Sammler 9 geleitet und von dort durch die Receiverleitungen 13 zurück in den Verteiler 5. Hierbei entweicht das Gas aus den Rohrleitungen durch das Belüftungsventil 25 in das Gaspendelsystem 33. Die dazu erforderliche Leitung ist nicht dargestellt. Um keinen Wärmeträger in das Gaspendelsystem 33 auszutragen, ist zwischen dem Belüftungsventil 25 und dem Verteiler 5 ein Phasendetektor 27 angeordnet. Im Phasendetektor 27 wird der Wechsel zwischen Gasphase und flüssiger Phase erkannt. Der detektierte Wechsel zeigt, dass die Gasphase aus den Receiverleitungen 13 weitgehend herausgedrückt wurde und die Receiverleitungen 13 dementsprechend flüssigkeitsgefüllt sind. Die Füllung der Receiverleitungen 13 wird durch dieses Ereignis beendet.

Das Treibgas zum Entleeren der Rohrleitungen wird beispielsweise dezentralen Druckgasspeichern 29 entnommen. Hierbei ist jedem Segment 3 ein dezentraler Druckspeicher 29 zugeordnet, wobei der dezentrale Druckspeicher 29 über das Belüftungsventil 25 mit dem Verteiler 5 und den Receiverleitungen 13 verbunden ist.

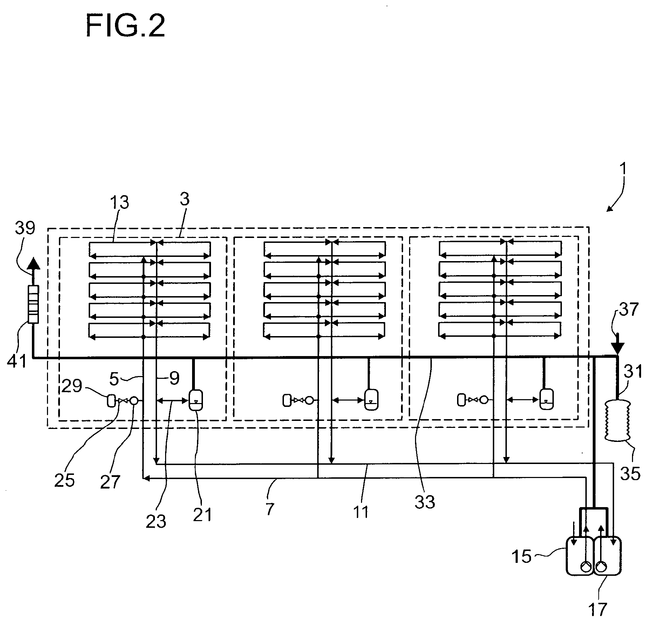

In Figur 2 ist ein linear konzentrierendes Solarkraftwerk mit einem nach außen abgeschlossenen Gaspendelsystem dargestellt.

Der Aufbau des in Figur 2 dargestellten linear konzentrierenden Solarkraftwerk 1 entspricht im Wesentlichen dem in Figur 1 dargestellten. Im Unterschied zu dem in Figur 1 dargestellten linear konzentrierenden Solarkraftwerk 1 ist bei dem in Figur 2 dargestellten linear konzentrierenden Solarkraftwerk 1 zusätzlich ein Gaspendelsystem 31 umfasst. Das Gaspendelsystem 31 umfasst ein Gaspendelrohrleitungsnetzwerk 33, das mit einem Gasvolumenspeicher 35, dem kalten Speicher 15, dem heißen Speicher 17 sowie allen Entleerungsbehältern 21 verbunden ist. Hierbei befinden sich die Gasanschlüsse jeweils am Kopf des kalten Speichers 15, des heißen Speichers 17 und der Entleerungsbehälter 21, sodass das Gaspendelrohrleitungsnetzwerk 33 jeweils mit den Gasräumen der jeweiligen Behälter 15, 17, 21 in Verbindung steht. In analoger Weise könnte auch ein Schichtenspeicher anstelle des kalten und des heißen Speichers 15, 17 eingebunden werden.

Zusätzlich weist das Gaspendelrohrleitungsnetzwerk 33 einen zentralen Gasanschluss 37 und einen Abgasauslass 39 auf. Über den zentralen Gasanschluss 37 kann bei Bedarf zusätzliches Gas zugeführt werden, über den Abgasauslass 39 kann überschüssiges Gas abgeführt werden. Zur Konditionierung des Abgases ist vorzugsweise am Abgasauslass 39 eine Abgasreinigung 41 vorgesehen. Die Abgasreinigung ist zum Beispiel ein Denox-System zum Abbau von Stickstoffoxiden aus dem abzulassenden Gas.

Durch das Gaspendelsystem ist es möglich, bei unterschiedlichen Füllhöhen in den einzelnen Speicherbehältern 15, 17, 21 Druckänderungen auszugleichen. So kann zum Beispiel Gas währen der Erwärmung des Wärmeträgers aus dem heißen Speicher 17 in den kalten Speicher 15 gelangen. Überschüssiges Gas kann dann im Gasvolumenspeicher 35 aufgefangen werden und von dort wieder zurück in das Gaspendelsystem 31 gelangen, wenn eine größere Gasmasse benötigt wird, um das entsprechende Gasvolumen auszufüllen.

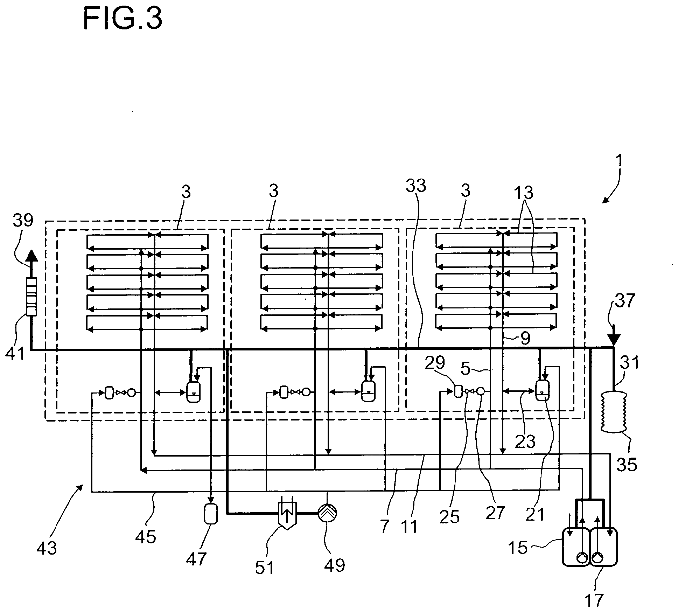

Figur 3 zeigt eine schematische Darstellung eines linear konzentrierenden Solarkraftwerks mit einem nach außen abgeschlossenen Gaspendelsystem und einem Gasdrucksystem zur Befüllung und Entleerung des Solarfeldes.

Bei dem in Figur 3 dargestellten linear konzentrierenden Solarkraftwerk 1 ist zusätzlich ein Gasdrucksystem 43 angeordnet. Das Gasdrucksystem 43 umfasst ein Druckgasrohrleitungssystem 45, an das die dezentralen Druckgasspeicher 29 und die Entleerungsbehälter 21 angeschlossen sind. Über das Druckgasrohrleitungssystem 45 können die dezentralen Druckspeicher 29 befüllt werden. Zusätzlich kann das Gasdrucksystem 43 einen zentralen Druckgasspeicher 47 umfassen. Der zentrale Druckgasspeicher 47 kann insbesondere zur zusätzlichen Bevorratung von Druckgas genutzt werden. Der Einsatz des zentralen Druckgasspeichers 47 ist optional. Alternativ oder zusätzlich zum zentralen Druckgasspeicher 47 wird das Gasdrucksystem 43 über einen Kompressor 49 mit dem Gaspendelrohrleitungsnetzwerk 33 des Gaspendelsystems 31 verbunden. Hierdurch ist es möglich, Gas aus dem Gaspendelsystem 31 über den Kompressor 49 in das Gasdrucksystem 43 einzuspeisen. Um gegebenenfalls im Gas des Gasdruckpendelsystems 31 enthaltene Fremdstoffes zu entfernen, ist es vorteilhaft, dem Kompressor 49 eine Abscheidevorrichtung 51 vorzuschalten.

Um die wärmeträgerführenden Rohrleitungen des linear konzentrierenden Solarkraftwerks 1 zu entleeren, wird Druckgas aus den dezentralen Druckspeichern 29 über die Belüftungsventile 25 und einen Phasenscheider mit dem Phasendetektor 27 in die Verteiler 5 eingespeist. Das Druckgas verdrängt den Wärmeträger aus Verteilern 5, Receiverleitungen 13 und Sammlern 9 in die Entleerungsbehälter 21. Hierdurch werden die Entleerungsbehälter 21 mit dem Wärmeträger befüllt und das in den Entleerungsbehältern 21 enthaltene Gas wird aus den Entleerungsbehältern in das Gaspendelsystem 33 gepresst.

Um das linear konzentrierende Solarkraftwerk 1 wieder in Betrieb zu nehmen, wird über das Druckgasrohrleitungssystem 45 Druckgas in die Entleerungsbehälter 21 gepresst und auf diese Weise der Wärmeträger durch die Entleerungsleitungen 23 zunächst in den Sammler 9 und über den Sammler in die Receiverleitungen 13 und den Verteiler 5 zurückgeführt. Hierdurch werden die wärmeträgerführenden Rohrleitungen wieder mit dem Wärmeträger gefüllt, sodass das linear konzentrierende Solarkraftwerk 1 wieder in Betrieb gehen kann. Nach der Entleerung des Systems werden die dezentralen Druckgasspeicher 29 wieder mit Druckgas befüllt. Hierzu wird zum Beispiel Anlagengas aus dem Gaspendelsystem 33 über den Kompressor 49 in das Gasdrucksystem 43 eingeleitet oder alternativ in den zentralen Druckgasspeicher 47.

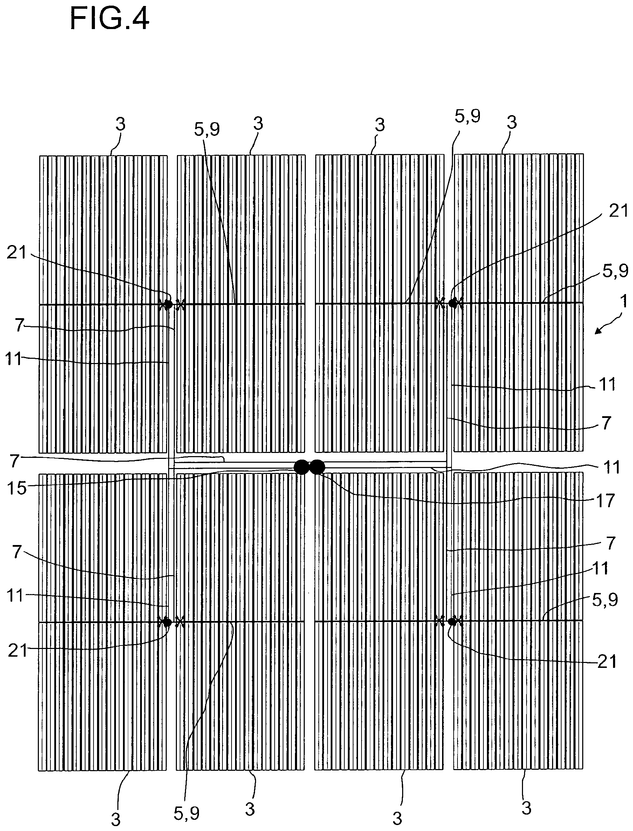

Figur 4 zeigt eine mögliche Anordnung von Segmenten 3 eines linear konzentrierenden Solarkraftwerks 1, die eine minimale Rohrleitungslänge erlaubt. Die Anordnung ist dabei in einer Doppelt-H-Struktur.

Um eine minimale Rohrleitungslänge zu gewährleisten, ist es vorteilhaft, den heißen Speicher 17 und den kalten Speicher 15 zentral im linear konzentrierenden Solarkraftwerk anzuordnen. Vom kalten Speicher 15 und heißen Speicher 17 verlaufen der zentrale Verteiler 7 und der zentrale Sammler 11 H-förmig. Der kalte Speicher 15 und der heiße Speicher 17 befinden sich dabei in der Mitte des H. An den jeweiligen Enden der Schenkel des H zweigen von dem zentralen Verteiler 7 und zentralen Sammler 11 jeweils die Verteiler 5 und Sammler 9 der einzelnen Segmente 3 ab. Auf diese Weise sind an jedem Ende eines Schenkels des H zwei Segmente 3 angeordnet, sodass sich hierdurch wieder jeweils die Struktur eines H ergibt.

Um auch die Rohrleitungslängen für das Gaspendelrohrleitungsnetzwerk und das Druckgasrohrleitungssystem so gering wie möglich zu halten, ist es vorteilhaft, wenn die Rohrleitungen des Gaspendelsystems und des Gasdrucksystems parallel zum zentralen Verteiler 7 und zentralen Sammler 11 verlaufen.

Wenn eine größere Anzahl an Segmenten gewünscht wird, ist es jeweils möglich, die zentralen Verteiler 7 und zentralen Sammler 11 zu verlängern, um zusätzliche Segmente 3 mit dem zentralen Verteiler 7 und zentralen Sammler 11 verbinden zu können, sodass auch in diesem Fall für das gesamte linear konzentrierende Solarkraftwerk 1 ein kalter Speicher 15 und ein heißer Speicher 17 ausreichend sind. Sollte die Wärmeträgermenge so groß werden, dass mehrere kalte Speicher 15 und heiße Speicher 17 notwendig werden, können jeweils einzelne linear zu konzentrierende Solarkraftwerke 1 unabhängig voneinander betrieben werden. Es ist alternativ auch möglich, dass das Gaspendelsystem, das Druckgassystem und auch die Wärmeträger führenden Systeme gekoppelt betrieben werden.

## Patentansprüche

1. Solarkraftwerk mit einem Rohrleitungssystem, enthaltend eine Salzschmelze als Wärmeträger, der einen Dampfdruck von weniger als 0,5 bar bei maximaler Betriebstemperatur aufweist, wobei das Rohrleitungssystem weiterhin mindestens eine Receiverleitung (13), in der die Salzschmelze durch einstrahlende Sonnenenergie erwärmt wird, oder einen Zentralreceiver, sowie mindestens einen Entleerungsbehälter (21) und/oder einen Speicher (15, 17) für die Salzschmelze umfasst, **dadurch gekennzeichnet, dass** das Rohrleitungssystem weiterhin ein Gaspendelsystem (31) umfasst, das Gasräume der in dem Solarkraftwerk eingesetzten Behälter untereinander verbindet und einen zentralen Gasspeicher (35) und/oder einen zentralen Gasanschluss (37) und einen zentralen Abgasauslass (39), durch den Gas an die Umgebung abgegeben werden kann, aufweist.

2. Solarkraftwerk gemäß Anspruch 1, **dadurch gekennzeichnet, dass** dem zentralen Gasanschluss (37) eine Pumpe zugeordnet ist, mit der der Druck des Gases erhöht werden kann.

3. Solarkraftwerk gemäß Anspruch 1 oder 2, **dadurch gekennzeichnet, dass** der Speicher (15, 17) ein Schichtenspeicher ist.

4. Solarkraftwerk gemäß einem der Ansprüche 1 bis 3, **dadurch gekennzeichnet, dass** das Gaspendelsystem (31) an ein Gasdrucksystem (43), das mit Entleerungsventilen der Receiverleitungen (13) verbunden ist, angeschlossen ist.

5. Solarkraftwerk gemäß einem der Ansprüche 1 bis 4, **dadurch gekennzeichnet, dass** der zentrale Abgasauslass (39) eine Vorrichtung zur Gasreinigung (41) aufweist, wobei die Vorrichtung zur Gasreinigung (41) vorzugsweise Feststoffe und/oder Stickstoffoxide aus dem Gas entfernt.

6. Solarkraftwerk gemäß einem der Ansprüche 1 bis 5 **dadurch gekennzeichnet, dass** das Gaspendelsystem (31) Rohrleitungen umfasst und das Rohrleitungssystem für die Salzschmelze Sammler (9, 11) und Verteiler (5, 7) umfasst, wobei die Rohrleitungen des Gaspendelsystems (31) parallel zu den Sammlern (9, 11) und den Verteilern (5,7) verlaufen.

7. Solarkraftwerk gemäß Anspruch 6, **dadurch gekennzeichnet, dass** Sammler (9, 11) und Verteiler (5, 7) zueinander beabstandet sind und die Receiverleitungen linear zwischen Sammler und Verteiler verlaufen.

8. Solarkraftwerk gemäß einem der Ansprüche 1 bis 7, **dadurch gekennzeichnet, dass** die im Solarkraftwerk eingesetzten Behälter den mindestens einen Entleerungsbehälter (21) und den Speicher für die Salzschmelze umfassen.

9. Solarkraftwerk gemäß einem der Ansprüche 1 bis 8, **dadurch gekennzeichnet, dass** das Solarkraftwerk ein linear konzentrierendes Solarkraftwerk oder ein Turmkraftwerk ist.

10. Verfahren zum Betrieb eines Solarkraftwerks gemäß einem der Ansprüche 1 bis 8, **dadurch gekennzeichnet, dass** über das Gaspendelsystem (31) ein Druckausgleich durch Gaszufuhr in einen zu entleerenden Tank oder durch Gasentnahme aus einem zu befüllenden Tank realisiert wird.

11. Verfahren gemäß Anspruch 10, **dadurch gekennzeichnet, dass** Gas aus dem Gaspendelsystem (31) entnommen wird, wenn ein Gasübergang von einem kalten in einen heißen Behälter erfolgt und Gas in das Gaspendelsystem zugeführt wird, wenn ein Gasübergang von einem heißen in einen kalten Behälter erfolgt.

12. Verfahren gemäß Anspruch 10 oder 11, **dadurch gekennzeichnet, dass** über den zentralen Gasanschluss (37) Frischgas zugeführt wird oder Anlagengas in das Gaspendelsystem (31) eingeleitet wird.

13. Verfahren gemäß einem der Ansprüche 10 bis 12, **dadurch gekennzeichnet, dass** das dem Gaspendelsystem (31) zugeführte Gas gegenüber der Salzschmelze inert ist, wobei das dem Gaspendelsystem (31) zugeführte Gas vorzugsweise Stickstoff ist.

14. Verfahren gemäß einem der Ansprüche 10 bis 13, **dadurch gekennzeichnet, dass** das dem Gaspendelsystem (31) zugeführte Gas Wasser und/oder Kohlenstoffdioxid enthält.

15. Verfahren gemäß einem der Ansprüche 10 bis 14, **dadurch gekennzeichnet, dass** das dem Gaspendelsystem (31) zugeführte Gas Sauerstoff oder Stickstoffoxide enthält.

## Claims

1. A solar power plant having a pipeline system, comprising a salt melt as a heat carrier, which has a vapor pressure of less than 0.5 bar at the maximum operating temperature, wherein the pipeline system furthermore comprises at least one receiver line (13), in which the salt melt is heated by incident solar energy, or one central receiver, and comprises at least one drainage container (21) and/or one store (15, 17) for the salt melt, wherein the pipeline system furthermore comprises a gas displacement system (31), which interconnects gas spaces of the containers used in the solar power plant and which has a central gas store (35) and/or a central gas connection (37) and a central exhaust-gas outlet (39) through which the gas can be discharged to the surroundings.

2. The solar power plant according toclaim 1, wherein a pump with which the pressure of the gas can be increased is assigned to the central gas connection (37).

3. The solar power plant according toclaim 1 or 2, wherein the store (15, 17) is a layer store.

4. The solar power plant as claimed one of claims 1 to 3, wherein the gas displacement system (31) is connected to a gas pressure system (43) which is connected to drainage valves of the receiver lines (13).

5. The solar power plant according toone of claims 1 to 4, wherein the central exhaust-gas outlet (39) has a device for gas purification (41), wherein the device for gas purification (41) preferably removes solids and/or nitrogen oxides from the gas.

6. The solar power plant according toone of claims 1 to 5, wherein the gas displacement system (31) comprises pipelines and the pipeline system for the salt melt comprises collectors (9, 11) and distributors (5, 7), wherein the pipelines of the gas displacement system (31) run parallel to the collectors (9, 11) and the distributors (5, 7).

7. The solar power plant according toclaim 6, wherein collector (9, 11) and distributor (5, 7) are spaced apart from one another and the receiver lines run in a linear manner between collector and distributor.

8. The solar polar plant according toone of claims 1 to 7, wherein the containers used in the solar power plant comprise the at least one drainage container (21) and the store for the salt melt.

9. The solar power plant according toone of claims 1 to 8, wherein the solar power plant is a linearly concentrating solar power plant or a tower power plant.

10. A method for operating a solar power plant according toone of claims 1 to 8, wherein, via the gas displacement system (31), pressure equalization is realized by supply of gas into a tank to be drained or by removal of gas from a tank to be filled.

11. The method according toclaim 10, wherein gas is removed from the gas displacement system (31) if a transfer of gas from a cold into a hot container occurs, and gas is supplied into the gas displacement system if a transfer of gas from a hot into a cold container occurs.

12. The method according toclaim 10 or 11, wherein, via the central gas connection (37), fresh gas is supplied or installation gas is introduced into the gas displacement system (31).

13. The method according toone of claims 10 to 12, wherein the gas supplied to the gas displacement system (31) is inert to the salt melt, wherein the gas supplied to the gas displacement system (31) is preferably nitrogen.

14. The method according toone of claims 10 to 13, wherein the gas supplied to the gas displacement system (31) comprises water and/or carbon dioxide.

15. The method according toone of claims 10 to 14, wherein the gas supplied to the gas displacement system (31) comprises oxygen or nitrogen oxides.

## Revendications

1. Centrale photovoltaïque comprenant un réseau de conduites, contenant un sel fondu faisant office de caloporteur, lequel présente une pression de vapeur inférieure à 0,5 bar à la température de service maximale, le réseau de conduites comportant en outre au moins une conduite réceptrice (13), dans laquelle le sel fondu est réchauffé par l'énergie solaire rayonnante incidente, ou un récepteur central ainsi qu'au moins un récipient de vidange (21) et/ou un accumulateur (15, 17) pour le sel fondu, **caractérisée en ce que** le réseau de conduites comporte en outre un système de déplacement de gaz (31) qui relie entre eux les espaces à gaz des récipients utilisés dans la centrale photovoltaïque et possède un accumulateur de gaz central (35) et/ou un raccord de gaz central (37) et une sortie à gaz perdu centrale (39) à travers laquelle le gaz peut être évacué dans l'environnement.

2. Centrale photovoltaïque selon la revendication 1, **caractérisée en ce qu'**une pompe est associée au raccord de gaz central (37), laquelle permet d'augmenter la pression du gaz.

3. Centrale photovoltaïque selon la revendication 1 ou 2, **caractérisée en ce que** l'accumulateur (15, 17) est un accumulateur à stratification.

4. Centrale photovoltaïque selon l'une des revendications 1 à 3, **caractérisée en ce que** le système de déplacement de gaz (31) est raccordé à un système de pression de gaz (43) qui est relié aux vannes de vidange des conduites réceptrices (13).

5. Centrale photovoltaïque selon l'une des revendications 1 à 4, **caractérisée en ce que** la sortie à gaz perdu centrale (39) possède un dispositif de purification de gaz (41), le dispositif de purification de gaz (41) éliminant de préférence les matières solides et/ou les dioxydes d'azote du gaz.

6. Centrale photovoltaïque selon l'une des revendications 1 à 5, **caractérisée en ce que** le système de déplacement de gaz (31) comprend des conduites et le réseau de conduites pour le sel fondu comprend des collecteurs (9, 11) et des distributeurs (5, 7), les conduites du système de déplacement de gaz (31) s'étendant parallèlement aux collecteurs (9, 11) et aux distributeurs (5, 7).

7. Centrale photovoltaïque selon la revendication 6, **caractérisée en ce que** les collecteurs (9, 11) et les distributeurs (5, 7) sont espacés les uns des autres et les conduites réceptrices s'étendent linéairement entre les collecteurs et les distributeurs.

8. Centrale photovoltaïque selon l'une des revendications 1 à 7, **caractérisée en ce que** les récipients utilisés dans la centrale photovoltaïque comprennent l'au moins un récipient de vidange (21) et l'accumulateur pour le sel fondu.

9. Centrale photovoltaïque selon l'une des revendications 1 à 8, **caractérisée en ce que** la centrale photovoltaïque est une centrale photovoltaïque à concentration linéaire ou une centrale photovoltaïque à tour.

10. Procédé d'exploitation d'une centrale photovoltaïque selon l'une des revendications 1 à 8, **caractérisé en ce qu'**un équilibrage de pression est réalisé par le biais du système de déplacement de gaz (31) par acheminement de gaz dans un réservoir à vidanger ou par prélèvement de gaz depuis un réservoir à remplir.

11. Procédé selon la revendication 10, **caractérisé en ce que** du gaz est prélevé du système de déplacement de gaz (31) lorsqu'il se produit une transition de gaz d'un récipient froid dans un récipient chaud et du gaz est acheminé dans le système de déplacement de gaz lorsqu'il se produit une transition de gaz d'un récipient chaud dans un récipient froid.

12. Procédé selon la revendication 10 ou 11, **caractérisé en ce que** par le biais du raccord de gaz central (37), du gaz frais est acheminé ou du gaz d'installation est injecté dans le système de déplacement de gaz (31).

13. Procédé selon l'une des revendications 10 à 12, **caractérisé en ce que** le gaz acheminé au système de déplacement de gaz (31) est inerte par rapport au sel fondu, le gaz acheminé au système de déplacement de gaz (31) étant de préférence de l'azote.

14. Procédé selon l'une des revendications 10 à 13, **caractérisé en ce que** le gaz acheminé au système de déplacement de gaz (31) contient de l'eau et/ou du dioxyde de carbone.

15. Procédé selon l'une des revendications 10 à 14, **caractérisé en ce que** le gaz acheminé au système de déplacement de gaz (31) contient de l'oxygène ou de l'oxyde d'azote.
